# EUROPÄISCHE PATENTSCHRIFT

(11) **EP 0 797 034 B1**
(45) Veröffentlichungstag und Bekanntmachung des Hinweises auf die Patenterteilung: **03.01.2001**
(21) Anmeldenummer: 97103925.0
(22) Anmeldetag: 08.03.1997
(51) Int. Cl.: F16K 27/04, F16K 11/078

(54) **Ventil**
Valve
Robinet

(30) Priorität: 19.03.1996 DE 19610620
(43) Veröffentlichungstag der Anmeldung: 24.09.1997
(73) Patentinhaber: Friedrich Grohe AG & Co. KG, 58675 Hemer (DE)
(72) Erfinder: Pawelzik, Manfred, 59494 Soest (DE); Hannemann, Fred, 04916 Herzberg (DE)

(56) Entgegenhaltungen:
- EP-A- 0 616 156
- EP-A- 0 641 963
- DE-A- 4 139 814
- FR-A- 2 528 520

## Beschreibung

Die Erfindung betrifft ein Ventil, insbesondere Einhebelmischventil, nach dem Oberbegriff von Anspruch 1.

Ein derartiges Ventil ist aus der deutschen Offenlegungsschrift DE 41 39 814 A1 bekannt. Bei dieser Ausbildung ist ein stufenförmig erweiterter Aufnahmeraum in dem Armaturenkörper ausgebildet, wobei die Ventilkartusche mit einem radial vorspringenden Ringbund versehen ist, der auf ein bestimmtes Eintauchmaß der Ventilkartusche abarbeitbar ausgebildet ist und danach beim Einbau der Ventilkartusche an der Stufe des Aufnahmeraums des Armaturenkörpers zur Anlage gelangt, so daß ein Verformen des Kartuschengehäuses und eine dadurch beispielsweise verursachte Schwergängigkeit der Ventilkartusche bei einem übermäßigen Anziehen der Gewindemutter ausgeschlossen wird.
Die bekannte Ausbildung erfordert durch den radial vorspringenden Ringbund einen relativ großen Außendurchmesser des Armaturenkörpers, was insbesondere bei Aufputz-Sanitärarmaturen als nachteilig angesehen werden kann.

Der Erfindung liegt die Aufgabe zugrunde, die bekannte Ventilkartuschenanordnung zu verbessern und so auszubilden, daß eine relativ schlanke Bauweise ermöglicht ist, dabei aber ein unerwünschtes Verformen der Ventilkartusche durch ein zu starkes Anziehen der Gewindemutter ausgeschlossen wird.

Diese Aufgabe wird erfindungsgemäß mit den Merkmalen des Anspruchs 1 gelöst.
Weitere Ausgestaltungen der Erfindung sind in den Ansprüchen 2 bis 10 angegeben.

Die mit der Erfindung erzielbaren Vorteile bestehen insbesondere darin, daß unterschiedliche Anzugsmomente, die auf den Anschraubring bzw. Schraubhülse bei der Montage der Armatur im Herstellerwerk oder nach der Installation des Armaturenkörpers auf der Baustelle aufbringbar sind, nur bis zu einem vorgesehenen Maß auf die Ventilkartusche mit den Dichtelementen und den Scheiben zur Einwirkung gelangen können. Werden darüber hinaus höhere Drehmomente beim Einschraubvorgang auf die Schraubhülse gebracht, so werden diese von der Stirnseite der Schraubhülse auf den Armaturenkörper abgegeben und somit eine übermäßige Krafteinwirkung auf die Ventilkartusche ausgeschlossen.
In weiterer Ausgestaltung der Erfindung kann der Armaturenkörper vorteilhaft mit einem Einsatz versehen sein, an dem die Aufnahmefläche für die Ventilkartusche ausgebildet ist, so daß mit einer Schraubhülse sowohl die Ventilkartusche als auch der Einsatz in dem Armaturenkörper gehalten werden kann.

Ein Ausführungsbeispiel ist in der Zeichnung dargestellt und wird im folgenden näher erläutert. Es zeigt
- Figur 1: ein sanitäres Wassermischventil mit Eingriffbedienung im Längsschnitt;
- Figur 2: einen Teil des in Figur 1 gezeigten Wassermischventils in vergrößerter Darstellung;
- Figur 3: die in Figur 1 gezeigte Schraubhülse in vergrößerter Darstellung im Längsschnitt;
- Figur 4: die in Figur 1 gezeigte Ventilkartusche im Längsschnitt.

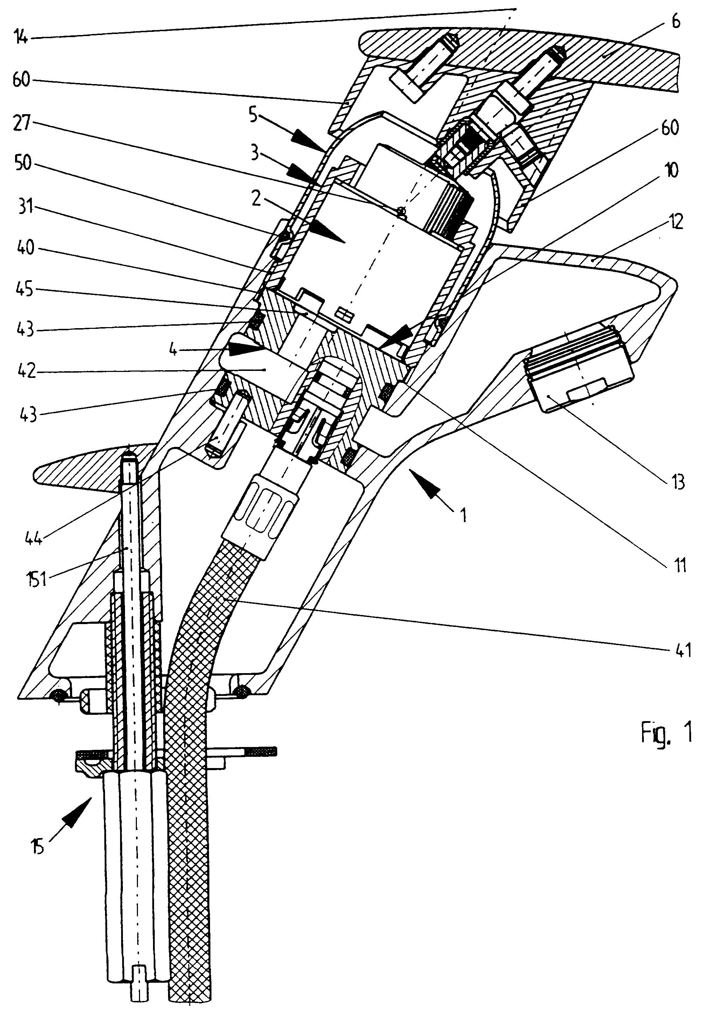

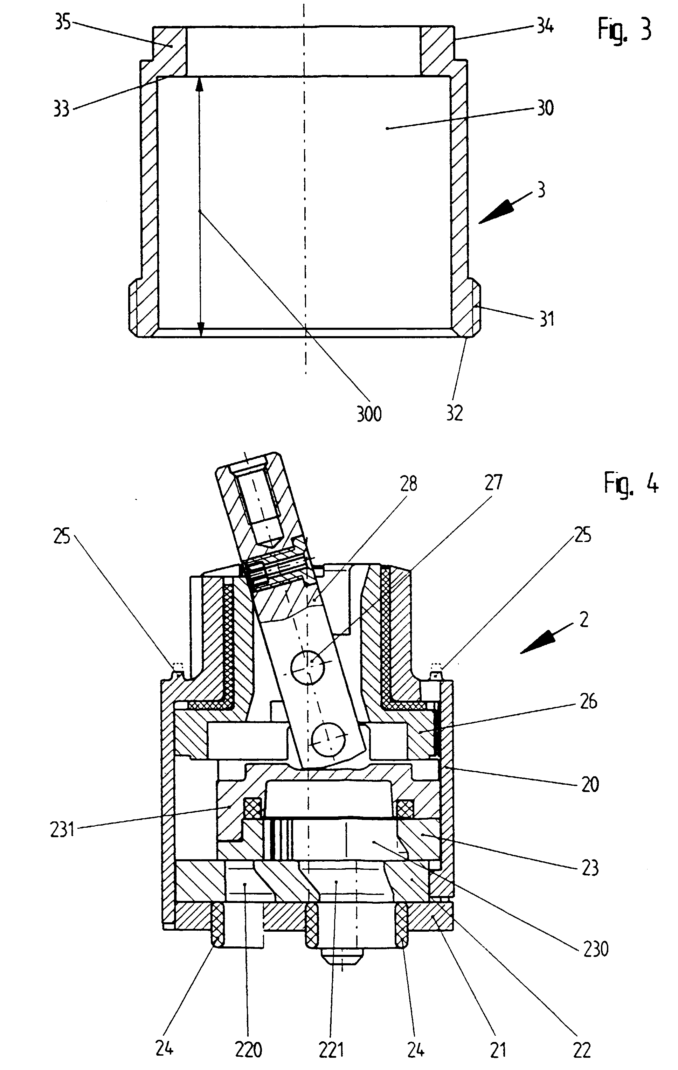

Das in der Figur 1 der Zeichnung dargestellte Einhebelmischventil weist im wesentlichen einen Armaturenkörper 1 auf, in dem ein Einsatz 4, eine Ventilkartusche 2 sowie eine Schraubhülse 3 angeordnet sind.
Der Einsatz 4 ist dabei mit einem bundartigen Radialvorsprung 40 an einer umlaufenden Schulter 11 im Armaturenkörper 1 angelagert und somit axial in der Stecklage gesichert. An der stromaufwärts gelegenen Stirnseite des Einsatzes 4 sind zwei Zuführleitungen 41 - in der Zeichnungsebene hintereinander angeordnet - mit einer bekannten Steckvorrichtung angeordnet. Außerdem ist ein Auslaßkanal 42 vorgesehen, mit dem in der Ventilkartusche 2 erzeugtes Mischwasser einem Auslaufarm 12 des Armaturenkörpers 1 zugeführt wird, von dem das Mischwasser durch ein Auslaufmundstück 13 als Freistrahl abgegeben wird. Zur Drehsicherung ist exzentrisch zur Mittelachse 14 am Einsatz 4 ein Stift 44 angeordnet, der mit einem vorstehenden Endbereich in eine entsprechende Bohrung an der stromaufwärts gelegenen Stirnseite des Armaturenkörpers 1 einfaßt, so daß der Einsatz 4 drehfest mit dem Armaturenkörper 1 in der Stecklage verbunden ist. Außerdem sind zu beiden Seiten des Auslaßkanals 42 in der Mantelfläche in Ringnuten O-Ringe 43 angeordnet, so daß gewährleistet ist, daß das in der Ventilkartusche erzeugte Mischwasser dem Auslaufarm 12 zugeführt wird.
Der Armaturenkörper 1 ist am unteren Bereich mit einer Befestigungseinrichtung 15 versehen, mit der er im Bereich einer Befestigungsöffnung an einem Waschtisch oder Spültisch etc. - in der Zeichnung nicht dargestellt - befestigt werden kann. Die Zuführleitungen 41 für Warm- und Kaltwasser werden hierbei ebenfalls durch die Öffnung im Waschtisch hindurchgeführt. Ferner ist ein Gestänge 151 zur Betätigung eines in der Zeichnung nicht dargestellten Ablaufventils in einem Spül- oder Waschbecken konzentrisch in der Befestigungseinrichtung 15 angeordnet. An der der Zuführungsleitungen 41 gegenüberliegenden Stirnseite des Einsatzes 4 ist eine Aufnahmefläche 10 ausgebildet, in der Öffnungen für das zufließende Kalt- und Warmwasser - in der Zeichnung nicht dargestellt - und eine Öffnung 45 für das aus der Ventilkartusche 2 austretende Mischwasser angeordnet sind. Oberhalb der Aufnahmefläche 10 ist die Gehäusebohrung mit Gewinde 31, insbesondere Feingewinde M42 x 1,5 , ausgebildet. In diese Bohrung ist die in Figur 4 gezeigte Ventilkartusche 2 einsetzbar, wobei die Dichtelemente 24, die in der Aufnahmefläche 10 ausgebildete Aussenkungen der Öffnungen fassen, durch eine axiale elastische Zusammenpressung eine dichtende Verbindung zwischen dem Einsatz 4 und einer ortsfest gehalterten Scheibe 22 herstellen.
Die Ventilkartusche 2 ist dabei mit einem Gehäuse, bestehend aus einer Hülse 20 und einem Boden 21, versehen, in dem die ortsfest gehaltene Scheibe 22 aus Keramikmaterial angeordnet ist, an der eine in dem Gehäuse bewegbar gehalterte Scheibe 23 aus Keramikmaterial angelagert ist. In der ortsfest gehaltenen Scheibe 22 sind zwei Durchtrittsöffnungen 220 - in der Zeichnungsebene hintereinander angeordnet - für das zufließende Kalt- und Warmwasser sowie eine Durchtrittsöffnung 221 für das austretende Mischwasser ausgebildet, die jeweils über die Dichtelemente 24 mit den entsprechenden Öffnungen in dem Einsatz 4 verbunden sind. In der bewegbaren Scheibe 23 ist ein Überströmkanal 230 ausgebildet, mit dem durch eine Relativbewegung zur Scheibe 22 mehr oder weniger die Durchtrittsöffnungen 220 für Kalt- und Warmwasser mit der Durchtrittsöffnung 221 verbindbar sind. Zur Bewegung der Scheibe 23 ist eine Abdeckplatte 231 abgedichtet und drehfest mit der Scheibe 23 verbunden, die andererseits an einer drehbar in der Hülse 20 angeordneten Buchse 26 abgestützt ist. In der Buchse 26 ist ein um eine horizontale Achse 27 schwenkbarer Stellhebel 28 angeordnet, der mit seinem inneren Hebelarm an der Abdeckplatte 231 angelenkt ist, während der äußere Hebelarm aus der Stirnseite der Ventilkartusche 2 herausgeführt ist.
An der Hülse 20 sind an der dem Boden 21 gegenüberliegenden Stirnseite als Ringsegmente ausgebildete Wulste 25 vorgesehen, an deren Stirnseite eine Nacharbeitung unter Bezugnahme auf die Fertigungstoleranzen der Einzelteile der Ventilkartusche 2 vorgenommen wird. Die gestrichelte Linie zeigt hierbei die ursprüngliche Vorstehlänge der Wulste 25 an, die entsprechend dem individuellen Maß des Scheibenpaketes in der Ventilkartusche 2 abgearbeitet wird.

Die Ventilkartusche 2 ist mit der Schraubhülse 3, wie es aus Figur 1 der Zeichnung zu entnehmen ist, in dem Armaturenkörper 1 gehaltert. Die Schraubhülse ist vorzugsweise aus Metall oder einem ähnlich festen Werkstoff hergestellt und weist einen Aufnahmeraum 30 für die Ventilkartusche 2 auf. Am Außenmantel der Schraubhülse 3 ist ein dem Gewinde der Aufnahmebohrung des Armaturenkörpers 1 entsprechendes Gewinde 31 ausgebildet. Die Schraubhülse 3 hat dabei eine Stirnfläche 32, mit der sie an der Aufnahmefläche 10 des Einsatzes 4 in der Einschraublage anliegt. In dieser Stellung liegen die entsprechend den Abmessungen des individuellen Scheibenpaketes abgearbeiteten Wulste 25 an einer Innenschulter 33 der Schraubhülse 3 an und drücken mit Hilfe der elastischen Dichtelemente 24 die aneinanderliegenden Scheiben 22,23 mit der erforderlichen Kraft aneinander. Zur guten Einschraubbarkeit der Schraubhülse 3 sind im Bereich eines verdickten Ansatzes 35 an der Außenmantelfläche Kantflächen 34 für den Ansatz eines Schraubwerkzeugs vorgesehen.
Zur Abdeckung der Schraubhülse 3 ist in der Aufnahmebohrung des Armaturenkörpers 1 eine Dekorhülse 5 mit Hilfe eines Reib- und Dichtringes 50 gehaltert. Die Dekorhülse 5 ist im vorstehenden Bereich sphärisch ausgebildet und wirkt mit einer Schürze 60 eines Eingriffhebels 6 zusammen, der in bekannter Weise an dem Stellhebel 28 befestigt ist.

Mit dem Eingriffhebel 6 kann durch eine Schwenkbewegung um die Achse 27 die Gesamtdurchflußmenge und durch eine Drehbewegung um die Mittelachse 14 das Mischungsverhältnis von Kalt- und Warmwasser eingestellt werden.

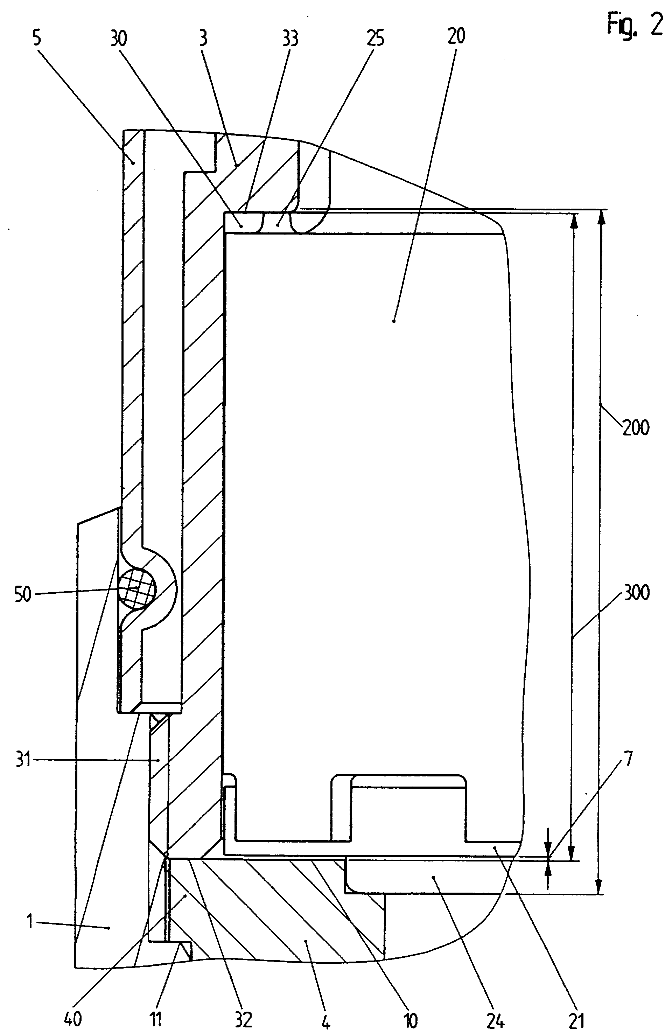

Die Zusammenmontage des vorstehend beschriebenen Einhebelmischventils kann in folgender Weise vorgenommen werden:
Zunächst wird der Einsatz 4 mit den Zuführleitungen 41 in die Stecklage eingebracht.
Parallel kann das Scheibenpaket in die aus Kunststoff hergestellte Hülse 20 eingesetzt werden und die ringsegmentförmigen Wulste 25 entsprechend der individuellen Abmessung des Scheibenpakets auf das erforderliche Maß durch Wärme- bzw. Ultraschalleinwirkung abgeschmolzen werden. Nunmehr kann die Ventilkartusche 2 an die Aufnahmefläche 10 des Einsatzes 4 angelagert werden, und die Schraubhülse 3 mit dem standardisierten Aufnahmeraum 30 kann über die Hülse 20 geschoben und von dem Gewinde 31 mit der Stirnfläche 32 gegen die Aufnahmefläche 10, wie es insbesondere aus Figur 2 der Zeichnung zu entnehmen ist, gegengeschraubt werden. Durch den Abschmelzvorgang weist hierbei die Ventilkartusche 2 die standardisierte Länge 200 auf, während die Länge 300 des Aufnahmeraums 30 um die aus dem Boden 21 vorstehende Länge der Dichtelemente 24 maximal verkürzt ausgebildet ist. Der Abstand 7 zwischen dem Boden 21 der Ventilkartusche 2 und der Aufnahmefläche 10 beträgt 0,1 bis 0,3 mm und könnte sich maximal über einen Bereich von 0 bis 0,6 mm erstrecken.

Danach kann zur Komplettierung die Dekorhülse 5 aufgeschoben und der Eingriffhebel 6 auf dem Stellhebel 28 befestigt werden.

Anstatt des separaten Einsatzes 4 kann der Armaturenkörper 1 auch einstückig mit dem Einsatz hergestellt sein. Auch kann die Ventilkartusche ohne Boden 21 ausgebildet sein, wobei dann die ortsfest gehalterte Scheibe 22 zusätzlich die Funktion eines Boden übernimmt. Die Anpassung der Hülse 20 an die individuelle Länge des Scheibenpakets kann auch durch mechanische Zerspanung, z. B. Fräsen, Drehen oder Schleifen erfolgen.

## Patentansprüche

1. Ventil, insbesondere Einhebelmischventil, mit wenigstens zwei aufeinanderliegenden, zueinander verschiebbaren Scheiben (22,23) als Ventilorgan, wobei wenigstens eine der Scheiben (22) eine oder mehrere Durchtrittsöffnungen (220,221) aufweist und die Scheiben (22,23) zusammen mit den zugehörigen Dicht- und Gleitelementen (26,231,24) in ein aus einem Boden (21) oder einer ortsfest gehaltenen Scheibe (22) und einer Hülse (20) gebildeten, eine Öffnung für ein Ventilstellglied und Zu- und Abflußöffnungen enthaltenden Gehäuse angeordnet sind, so daß das Gehäuse mit den Ventilelementen als Baueinheit oder Ventilkartusche (2) in einen Armaturenkörper einsetzbar ist und die Abdichtung zum Armaturenkörper (1) von den Dichtelementen (24) erfolgt, und dass die Hülse (20) der Ventilkartusche (2) mit einer nacharbeitbaren Stirnseite versehen ist, wobei eine Schraubhülse (3) mit Gewinde (31) in den Armaturenkörper (1) einschraubbar ist, dadurch gekennzeichnet, daß die nacharbeitbare Stirnseite an der dem Boden (21) oder der ortsfest gehaltenen Scheibe (22) der Ventilkartusche (2) abgekehrten Stirnseite an der Hülse (20) ausgebildet ist, wobei
- ein Aufnahmeraum (30) für die Ventilkartusche (2) in der Schraubhülse (3) ausgebildet ist
- die Schraubhülse (3) in der eingeschraubten Stellung mit einer Stirnfläche (32) auf einer Aufnahmefläche (10) des Armaturenkörpers (1) im Bereich des Bodens (21) der Ventilkartusche (2) aufliegt, während die nachgearbeitete Stirnseite an einer Innenschulter (33) der Schraubhülse (3) anliegt.

2. Ventil nach Anspruch 1, dadurch gekennzeichnet, daß die nacharbeitbare Stirnseite als axial vorstehende Vorsprünge oder als ringsegmentförmige Wulste (25) ausgebildet sind.

3. Ventil nach Anspruch 1 oder 2, dadurch gekennzeichnet, daß die Vorstehlänge der Stirnseite oder der ringsegmentförmigen Wulste (25) durch Werkstoffverformung oder Werkstoffzerspanung, bezogen auf die aus der Hülse (20) vorstehende Stirnfläche des Bodens (21) oder der vorstehenden Stirnfläche der Dichtelemente (24) für die Zulauf- und/oder Ablauföffnungen der kompletten Ventilkartusche (2), auf das durch den Aufnahmeraum (30) der Schraubhülse (3) vorgegebene Maß reduziert ist.

4. Ventil nach wenigstens einem der Ansprüche 1 bis 3, dadurch gekennzeichnet, daß in dem Armaturenkörper (1) ein Einsatz (4) für die Anlage der Ventilkartusche (2) angeordnet ist, wobei der Einsatz (4) in der Stecklage mit einem Radialvorsprung (40) an einer Schulter (11) im Armaturenkörper (1) anliegt und von der eingeschraubten Schraubhülse (3) in der Stecklage gehalten ist.

5. Ventil nach einem der Ansprüche 2 bis 4, dadurch gekennzeichnet, daß die Hülse (20) mit den ringsegmentförmigen Wulsten (25) einstückig aus Kunststoff hergestellt ist, wobei die Wulste (25) so dimensioniert sind, daß das von dem Aufnahmeraum (30) vorgegebene Maß für die komplettierte Ventilkartusche (2) durch einen Abschmelzvorgang herstellbar ist.

6. Ventil nach einem der Ansprüche 1 bis 5, dadurch gekennzeichnet, daß die Schraubhülse (3) aus Metall hergestellt ist, und das Gewinde (31) als Feingewinde, vorzugsweise M42 x 1,5 , ausgebildet ist.

7. Ventil nach einem der Ansprüche 1 bis 6, dadurch gekennzeichnet, daß die Schraubhülse (3) einen im Innendurchmesser verkleinerten Ansatz (35) trägt, an dessen Mantelfläche Kantflächen (34) für den Angriff eines Schraubwerkzeugs ausgebildet sind.

8. Ventil nach wenigstens einem der Ansprüche 1 bis 7, dadurch gekennzeichnet, daß die Nacharbeitung der Stirnseite soweit erfolgt, daß bei eingeschraubter Schraubhülse (3) zwischen dem Boden (21) oder der ortsfest gehaltenen Scheibe (22) und der Aufnahmefläche (10) am Armaturenkörper (1) ein Abstand von 0 bis 0,6 mm, vorzugsweise von 0,1 bis 0,3 mm, vorgesehen ist.

9. Ventil nach einem der Ansprüche 4 bis 8, dadurch gekennzeichnet, daß dem Einsatz (4) eine Zuführungsleitung (41) für Warmwasser und/oder Kaltwasser angeschlossen und ein Auslaßkanal (42) ausgebildet ist, wobei der Einsatz (4) mittels O-Ringen (43) gedichtet und mit Hilfe eines im Armaturenkörper (1) angeordneten Stiftes (44) drehfest in der Stecklage gehalten ist.

10. Ventil nach einem der Ansprüche 1 bis 9, dadurch gekennzeichnet, daß die Schraubhülse (3) mit einer konzentrisch im Armaturenkörper (1) einsetzbaren Dekorhülse (5) abdeckbar ist.

## Claims

1. A valve, especially a single-lever mixing valve, having at least two superimposed discs (22, 23) displaceable relative to one another as the valve member, wherein at least one of the discs (22) has one or more through-openings (220, 221) and the discs (22, 23), together with the associated sealing and antifriction elements (26, 231, 24), are arranged in a housing formed from a base (21), or a fixedly retained disc (22), and a sleeve (20) and containing an opening for a valve adjusting member and inlet and outlet openings, so that the housing with the valve elements is insertable as a modular unit or valve cartridge (2) into a plumbing fitting body and the seal with respect to the plumbing fitting body (1) is effected by the sealing elements (24), and the sleeve (20) of the valve cartridge (2) is provided with a subsequently machinable end, wherein a threaded sleeve (3) having a thread (31) is capable of being screwed into the plumbing fitting body (1), characterised in that the subsequently machinable end is constructed on the sleeve (20) at the end thereof remote from the base (21) or the fixedly retained disc (22) of the valve cartridge (2), wherein
- a receiving chamber (30) for the valve cartridge (2) is constructed in the threaded sleeve (3),
- in its screwed-in position the threaded sleeve (3) lies with an end face (32) on a locating surface (10) of the plumbing fitting body (1) in the region of the base (21) of the valve cartridge (2), whilst the subsequently machined end abuts an inner shoulder (33) of the threaded sleeve (3).

2. A valve according to claim 1, characterised in that the subsequently machinable end is formed as axially protruding projections or ring segment-shaped beads (25).

3. A valve according to claim 1 or 2, characterised in that the projecting length of the end or of the ring segment-shaped beads (25), relative to the end face of the base (21) protruding from the sleeve (20), or the protruding end face of the sealing elements (24) for the inlet and/or outlet openings of the complete valve cartridge (2), is reduced by material deformation or material removal to the dimension allowed by the receiving chamber (30) of the threaded sleeve (3).

4. A valve according to at least one of claims 1 to 3, characterised in that an insert (4) for mounting the valve cartridge (2) is arranged in the plumbing fitting body (1), the insert (4) in the inserted position, with a radial projection (40), abutting a shoulder (11) in the plumbing fitting body (1) and being held in the inserted position by the screwed-in threaded sleeve (3).

5. A valve according to any one of claims 2 to 4, characterised in that the sleeve (20) is manufactured with the ring segment-shaped beads (25) in one piece from plastics material, the dimensions of the beads (25) being such that the dimension allowed by the receiving chamber (30) for the fully assembled valve cartridge (2) can be produced by a melt-off process.

6. A valve according to any one of claims 1 to 5, characterised in that the threaded sleeve (3) is manufactured from metal and the thread (31) is in the form of a fine thread, preferably M42 x 1.5.

7. A valve according to any one of claims 1 to 6, characterised in that the threaded sleeve (3) carries an extension (35) of reduced internal diameter, on the outer surface of which there are formed edged faces (34) for the application of a spanner.

8. A valve according to at least one of claims 1 to 7, characterised in that subsequent machining of the end is effected to the extent that, with the threaded sleeve (3) screwed in, a distance of 0 to 0.6 mm, preferably of 0.1 to 0.3 mm is provided between the base (21) or the fixedly retained disc (22) and the locating surface (10) on the plumbing fitting body (1).

9. A valve according to any one of claims 4 to 8, characterised in that a supply pipe (41) for hot water and/or cold water is connected to the insert (4), and an outlet channel (42) is formed, the insert (4) being sealed by means of 0-rings (43) and being held non-rotatably in the inserted position by means of a pin (44) arranged in the plumbing fitting body (1).

10. A valve according to any one of claims 1 to 9, characterised in that the threaded sleeve (3) is coverable with a decorative sleeve (5) insertable concentrically in the plumbing fitting body (1).

## Revendications

1. Robinet, en particulier mitigeur mono-commande avec au moins deux disques (22, 23) reposant l'un sur l'autre, coulissant l'un par rapport à l'autre en tant qu'organe de soupape, dans lequel au moins l'un des deux disques (22) présente un ou plusieurs passages (220, 221) et les disques (22, 23) ainsi que des éléments d'étanchéité et de glissement correspondant (22, 231, 24) sont disposés dans un boîtier comportant une ouverture pour un organe de commande de soupape et des ouvertures d'arrivée et de sortie, et constitué d'un fond (21) ou d'un disque maintenu fixe (22) et d'une douille (20), de sorte que
• le boîtier avec les éléments de soupape peut être installé dans un corps de robinet (1) en tant qu'ensemble ou cartouche de soupape (2), en réalisant l'étanchéité par rapport au corps de robinet (1) au moyen des éléments d'étanchéité (24),
• la douille (20) de la cartouche (2) comporte une face frontale permettant un usinage de finition, et
• un manchon fileté (3) avec un filetage (31) peut se visser dans le corps de robinet (1),
caractérisé en ce que
• la face frontale à usinage de finition est réalisée sur la douille (20), du côté opposé au fond (21) ou au disque maintenu fixe (22) de la cartouche (2),
• un logement (30) pour la cartouche (2) étant réalisé dans le manchon fileté (3), et
• le manchon fileté (3) reposant, en position vissée, avec une face frontale (32) sur une surface de réception (10) du corps de robinet (1) dans la zone du fond (21) de la cartouche (2), alors que la face frontale à usinage de finition s'appuie sur un épaulement intérieur (33) du manchon fileté (3).

2. Robinet selon la revendication 1,
caractérisé en ce que
la face frontale à usinage de finition est réalisée sous la forme de saillies axiales ou d'un bourrelet annulaire (25).

3. Robinet selon la revendication 1 ou 2,
caractérisé en ce que
la longueur en saillie de la face frontale ou du bourrelet en forme de segment annulaire (25) est réduit à la mesure prédéterminée par le logement (30) du manchon fileté (3) par déformation de matière ou enlèvement de matière, en fonction de la face frontale du fond (21) en saillie de la douille (20) ou de la face frontale en saillie de l'élément d'étanchéité (24) pour les ouvertures d'arrivée et/ou de sortie de la cartouche (2) complète.

4. Robinet selon l'une quelconque des revendications 1 à 3,
caractérisé en ce qu'
un insert (4) pour l'installation de la cartouche (2) se trouve dans le corps de robinet (1), l'insert (4) s'appuyant en position engagée par une saillie radiale (40) sur un épaulement (11) dans le corps de robinet (1) et étant maintenu en position engagée par le manchon fileté (3) vissé.

5. Robinet selon l'une quelconque des revendications 2 à 4,
caractérisé en ce que
la douille (20) est réalisée avec les bourrelets en forme de segment annulaire (25) en une seule pièce en matière plastique, les bourrelets (25) étant dimensionnés de sorte que la mesure prédéterminée par le logement (30) pour la cartouche de soupape complète puisse être obtenue par un processus de séparation par fusion.

6. Robinet selon l'une quelconque des revendications 1 à 5,
caractérisé en ce que
le manchon fileté (3) est réalisé en métal et le filetage (31) est réalisé sous la forme d'un filetage de précision de préférence M42 X 1,5.

7. Soupape selon l'une quelconque des revendications 1 à 6,
caractérisée en ce que
le manchon fileté (3) est muni d'un épaulement (35) de diamètre intérieur réduit, dont la surface enveloppe comporte des surfaces munies d'arête (34) pour la prise d'un outil de vissage.

8. Robinet selon l'une quelconque des revendications 1 à 7,
caractérisé en ce que
l'usinage de finition de la face frontale laisse subsister lorsque le manchon fileté (3) est vissé, un intervalle de 0 à 0,6 mm, de préférence de 0,1 à 0,3 mm, entre le fond (21) ou le disque (22) maintenu fixe et la surface de réception (10) du corps de robinet (1).

9. Robinet selon l'une quelconque des revendications 4 à 8,
caractérisé en ce qu'
une conduite (41) pour l'eau chaude et/ou l'eau froide est reliée à l'insert (4), et on réalise un canal de sortie (42), l'insert (4) étant recouvert par des joints toriques (43) et étant maintenu fixe en rotation dans sa position engagée à l'aide d'un goujon (44) disposé dans le corps de robinet (1).

10. Robinet selon l'une quelconque des revendications 1 à 9,
caractérisé en ce que
le manchon fileté (3) est recouvert par une douille décorative (5) installée concentriquement dans le corps de robinet (1).
